# EUROPÄISCHE PATENTSCHRIFT

(11) **EP 2 789 106 B1**
(45) Veröffentlichungstag und Bekanntmachung des Hinweises auf die Patenterteilung: **06.04.2016**
(21) Anmeldenummer: 12808710.3
(22) Anmeldetag: 05.12.2012
(51) Int. Cl.: H04B 3/54

(54) **NETZWERK-KOMPONENTE FÜR EIN FAHRZEUG-NETZWERK UND ENTSPRECHENDES FAHRZEUG-NETZWERK**
NETWORK COMPONENT FOR A VEHICLE NETWORK AND CORRESPONDING VEHICLE NETWORK
ÉLÉMENT DE RÉSEAU POUR UN RÉSEAU DE VÉHICULE ET RÉSEAU DE VÉHICULE CORRESPONDANT

(30) Priorität: 06.12.2011 DE 102011087828
(43) Veröffentlichungstag der Anmeldung: 15.10.2014
(73) Patentinhaber: Continental Automotive GmbH, 30165 Hannover (DE)
(72) Erfinder: NÖBAUER, Josef, 92445 Neukirchen-Balbini (DE); RATH, Andreas, 93053 Regensburg (DE)
(86) Internationale Anmeldenummer: PCT/EP2012/074532
(87) Internationale Veröffentlichungsnummer: WO 2013/083644

(56) Entgegenhaltungen:
- EP-A1- 2 326 026
- WO-A1-2008/015316

## Beschreibung

Die Erfindung betrifft eine Netzwerk-Komponente, insbesondere eine netzwerkfähige Fahrzeug-Komponente, eines Fahrzeug-Netzwerks. Die Erfindung betrifft weiterhin ein entsprechendes Fahrzeug-Netzwerk mit der einen Netzwerk-Komponente und mindestens einer weiteren Netzwerk-Komponente.

Eine derartige Netzwerk-Komponente eines Fahrzeug-Netzwerks ist zum Beispiel eine netzwerkfähige Fahrzeugkomponente. Das entsprechende Fahrzeug-Netzwerk ist ein Netzwerk zur Übertragung digitaler Signale zwischen Netzwerk-Komponenten, von denen mindestens eine Komponente als netzwerkfähige Fahrzeug-Komponente ausgebildet ist. Fahrzeug-Netzwerke basieren derzeit zumeist auf seriellen Bus-Systemen. Neben der entsprechenden Bus-Topologie sind bereits auch andere Netzwerk-Topologien für den Einsatz in Fahrzeugen angedacht. Ein Beispiel für ein Bus-System zur Vernetzung von den diversen netzwerkfähigen Fahrzeugkomponente zur Realisierung systemübergreifender Funktionen eines Fahrzeugs ist ein auf dem CAN-Bus (Controller Area Network) basierendes asynchrones, serielles Bussystem. Ein anderes Beispiel ist ein LIN: Local Interconnect Network Bus-System. Eine Anwendung eines solchen Fahrzeug-Netzwerks ist beispielsweise die signaltechnische Verbindung von Komponenten eines Fahrerassistenzsystems. Entsprechende netzwerkfähige Fahrzeugkomponenten sind zum Beispiel Steuergeräte für Motor, Getriebe, etc., fahrzeugtypische Bedien- und Anzeigeeinheiten sowie Kontrolleinheiten von Fahrzeugsensoren.

Die netzwerkfähigen Fahrzeug-Komponenten des Fahrzeug-Netzwerks sind Fahrzeug-Komponenten, die in verschiedenen Ausführungen direkt aus einem von dem jeweiligen Fahrzeug-Netzwerk unabhängigen Versorgungsnetz (Bordnetz) des Fahrzeugs betrieben werden. Bei der direkten Energieversorgung aus dem Bordnetz ist ein aufwendiges Netzteil mit Filter- und Schutzkomponenten in jeder der Fahrzeug-Komponenten notwendig, um im Fahrzeug auftretenden Spannungsimpulsen standzuhalten.

Weiterhin sind Netzwerke bekannt, bei denen eine Energieversorgung einzelner Netzwerk-Komponenten über die Signalleitungen des Netzwerks beziehungsweise die Signalleitungen einzelner Netzwerk-Segmente des Netzwerks erfolgt. Ein Beispiel für ein solches Netzwerk ist ein Power Over Ethernet (PoE) Netzwerk. Power Over Ethernet (PoE) bezeichnet dabei ein Verfahren, mit dem netzwerkfähige Geräte im Ethernet-Netzwerk über das 8-adrige Ethernet-Kabel mit Strom versorgt werden können.

Die EP 2 073 435 A1 beschreibt die Verwendung von Power Over Ethernet für ein in einem Fahrzeug installiertes Video- und Audiosystem. Die Netzwerk-Komponenten des gezeigten Netzwerks sind ausschließlich die für derartige Systeme üblichen Lautsprecher, Displays, etc.

Ein anderes Beispiel des Standes der Technik kann im EP 2 326 026 gefunden werden.

Aufgabe der Erfindung ist es, eine Netzwerk-Komponente bereitzustellen, die für eine Vielzahl von unterschiedlichen Fahrzeug-Netzwerken universell einsetzbar ist und ein entsprechendes Fahrzeug-Netzwerk bereitzustellen, bei dem die weiteren Netzwerk-Komponenten vereinfacht werden können.

Die Lösung der Aufgabe erfolgt erfindungsgemäß durch die Merkmale der unabhängigen Ansprüche. Vorteilhafte Ausgestaltungen sind in den Unteransprüchen angegeben.

Die erfindungsgemäße Netzwerk-Komponente weist eine einen Prozessor aufweisende Signalverarbeitungs-Einrichtung, mindestens eine an ein Versorgungsnetz des Fahrzeugs anschließbare Spannungsquelle und mindestens eine mit der Signalverarbeitungs-Einrichtung und der Spannungsquelle gleichzeitig verbundene Koppeleinrichtung. Die Leitungen mindestens eines Netzwerksegments des Fahrzeugnetzwerks sind zur gleichzeitigen signaltechnischen Verbindung dieses Netzwerksegments mit der Signalverarbeitungs-Einrichtung und zur Spannungsversorgung dieses Netzwerksegments durch die Spannungsquelle an die Koppeleinrichtung anschließbar. Die Spannungsquelle ist dabei derart eingerichtet, dass ein Spannungsverhältnis zwischen mindestens einer von der Spannungsquelle bereitgestellten Versorgungsspannung Vout, V1out, V2out und der vom Versorgungsnetz bereitgestellten Spannung Vin aus einer Auswahl mehrerer vorbestimmter Spannungsverhältnisse auswählbar ist. Dieses Verhältnis ist zum Beispiel ein Verhältnis von 5 Volt zu 12 Volt (5V / 12V) oder 3.3 Volt zu 12 Volt (3.3 V / 12 V). Die Spannungswerte von 5V und von 3.3V sind dabei typische Spannungswerte von Logik-Bausteinen (TTL-Logik, etc.). Das Versorgungsnetzwerk (Bordnetz) eines Personenkraftwagen liefert hingegen typischerweise eine Versorgungsspannung von 12 Volt. Die Spannungsquelle ist insbesondere ein Multi-Spannungsnetzteil.

In dem mindestens einen Netzwerksegment ist mindestens eine weitere Netzwerk-Komponente angeschlossen. Diese Netzwerk-Komponente oder zumindest eine dieser Netzwerk-Komponenten ist mittels der Spannungsquelle mit mindestens einer aus einer Auswahl mehrerer vorbestimmter Spannungsniveaus U1, U2, ... wählbaren Versorgungsspannung versorgbar beziehungsweise wird mittels der Spannungsquelle mit dieser Versorgungsspannung versorgt. Auch diese mindestens eine weitere Netzwerk-Komponente ist bevorzugt eine netzwerkfähige Fahrzeug-Komponente. Beispiele für solche netzwerkfähigen Fahrzeug-Komponenten sind Steuergeräte für Motor, Getriebe, etc., fahrzeugspezifische Bedien- und Anzeigeeinheiten und Kontrolleinheiten von Fahrzeugsensoren. Das Fahrzeug-Netzwerk ist somit ein Daten-Netzwerk eines Fahrzeugs, das um eine Energieversorgungs-Komponente erweitert ist. Mit Vorteil ist das Fahrzeug-Netzwerk ein Power Over Ethernet (PoE) Netzwerk. Besonders bevorzugt ist es jedoch ein PoE Netzwerk das nicht dem IEEE-Standard 802.3af oder 802.3at (PoE+) entspricht und mindestens eine an die Bedürfnisse der netzwerkfähigen Fahrzeugkomponenten angepasste Versorgungsspannung aufweist.

Herkömmliche Fahrzeugkomponenten, die bislang über das parallele Versorgungsnetz (Bordnetz) des Fahrzeugs versorgt werden mussten, können nun ohne größeren Aufwand über das die Versorgungsspannung bereitstellende Fahrzeug-Netzwerk mit elektrischer Energie versorgt werden. Dabei können die bei der Versorgung über das Bordnetz üblichen aufwendigen Filter- und Schutzkomponenten in jeder der weiteren Fahrzeug-Komponenten entfallen. Diese sind nur noch in der mindestens einen die Versorgungsspannung bereitstellenden Fahrzeug-Komponente notwendig.

Ein weiterer Vorteil ergibt sich bei Fahrzeug-Netzwerken, bei denen die weiteren Netzwerk-Komponenten mindestens eines (ersten) Netzwerksegments zur Energieeinsparung oder aus anderen Gründen temporär inaktiv geschaltet und wieder "aufgeweckt" werden sollen. Dies kann Netzwerksegment-weise durch ab- und anschalten der Spannungsversorgung durch die eine Netzwerk-Komponente erfolgen.

Das Fahrzeug-Netzwerk ist insbesondere ein Fahrzeug-Netzwerk eines Kraftfahrzeugs. Kraftfahrzeuge sind unter anderem Motorräder, Personenkraftwagen, Lastkraftwagen, Busse und entsprechende Sonder-Kraftfahrzeuge (Bagger, etc.).

Insbesondere ist vorgesehen, dass zumindest eines der Spannungsniveaus kleiner als 12 Volt ist, insbesondere im Bereich 0 Volt ≤ x ≤ 10 Volt liegt. Derart niedrige Spannungen werden von einigen Fahrzeug-Komponenten standardmäßig benötigt. Dies sind zum Beispiel Sensoren - die ohne zusätzliche Beschaltung auskommen müssen - um die für Ihre elektronischen Bauelemente notwendigen Betriebsspannungen zu erhalten und trotzdem Beschränkungen bzgl. Größe in Bezug zum verfügbaren Bau-Raum unterliegen.

Gemäß einer bevorzugten Ausführungsform der Erfindung ist vorgesehen, dass die Spannungsquelle für ein Spannungsniveau der vom Versorgungsnetz bereitgestellten Spannung vorgesehen ist, das ein fahrzeugtypisches Spannungsniveau ist. Fahrzeugtypische Spannungsniveaus sind für Kraftfahrzeuge zum Beispiel Bordnetztypische Spannungen wie 12 Volt für Personenkraftwagen, 24 Volt für Lastkraftwagen/Busse, 48 Volt für Elektro- und Hybridkraftfahrzeuge und 600 V für reine Elektrofahrzeuge. Insbesondere sind alle Spannungsniveaus U1, U2, ... fahrzeugtypische Spannungsniveaus.

Eine Netzwerk-Komponente, die eine Versorgungsspannung mit fahrzeugtypischen Spannungsniveaus liefert, hat den Vorteil, dass herkömmliche Fahrzeugkomponenten, die bislang über das parallele Bordnetz des Fahrzeugs versorgt werden mussten, nun mit besonders wenig Änderungsbedarf über das Fahrzeug-Netzwerk mit elektrischer Energie versorgt werden können.

Mit Vorteil ist vorgesehen, dass die Spannungsquelle eine Filter- und/oder Schutzbeschaltung zum Aussondern von aus dem Versorgungsnetz kommenden Störspannungsanteilen aufweist. Die von der Netzwerk-Komponente versorgten weiteren Netzwerk-Komponenten benötigen keine eigenen Filter- und/oder Schutzbeschaltungen oder lediglich einfachere Filter- und/oder Schutzbeschaltungen oder können entsprechend einfacher gestaltet werden.

Gemäß einer weiteren bevorzugten Ausführungsform der Erfindung ist vorgesehen, dass die Netzwerk-Komponente zur Versorgung von zumindest zwei Netzwerksegmenten oder zumindest zwei Gruppen von Netzwerksegmenten mit Versorgungsspannungen unterschiedlicher Spannungsniveaus eingerichtet ist.

Gemäß einer weiteren bevorzugten Ausführungsform der Erfindung ist vorgesehen, dass die Netzwerk-Komponente eine Eingabeeinrichtung zur manuellen Auswahl des mindestens einen Spannungsniveaus und/oder eine signaltechnischen Verbindung zwischen dem Prozessors der Signalverarbeitungs-Einrichtung und der Spannungsquelle zu deren Ansteuerung durch den Prozessor aufweist. Der Prozessor seinerseits ist wiederum über das Fahrzeug-Netzwerk ansteuerbar, sodass die Auswahl des Spannungsniveaus auch über das Netzwerk erfolgen kann. Das heißt dass abhängig von Kommunikation auf dem Fahrzeugnetzwerk die Spannung bzw. Energie variabel eingestellt werden kann.

Insbesondere ist die Auswahl des mindestens einen Spannungsniveaus beziehungsweise des Spannungsverhältnisses eine manuelle Auswahl. Dazu weist die Netzwerk-Komponente die Eingabevorrichtung zur manuellen Auswahl auf. Alternativ oder zusätzlich erfolgt die Auswahl durch eine Ansteuerung mittels des Prozessors der Signalverarbeitungs-Einrichtung. Dazu ist der Prozessor der Signalverarbeitungs-Einrichtung über die als Steuerleitung mit der mindestens einen Spannungsquelle verbunden.

Bei Verwendung von mehreren Leitungspaaren pro Netzwerksegment können über die unterschiedlichen Leitungspaare auch mehrere unterschiedliche Versorgungsspannungen pro Netzwerksegment bereitgestellt werden.

Mit Vorteil ist vorgesehen, dass an die Koppeleinrichtung pro Netzwerksegment entweder ein Leitungspaar anschließbar ist oder zwei Leitungspaare anschließbar sind.

Gemäß einer weiteren vorteilhaften Ausgestaltung der erfindungsgemäßen Netzwerk-Komponente ist vorgesehen, dass die Signalverarbeitungs-Einrichtung eine Netzwerk-Weiche (einen Switch) zur schaltbaren signaltechnischen Verbindung des mindestens einen Netzwerksegments mit mindestens einem zweiten Netzwerksegment des Fahrzeug-Netzwerks umfasst, wobei die Leitungen dieses zweiten Netzwerksegments an die Signalverarbeitungs-Einrichtung anschließbar sind.

Das erfindungsgemäße Fahrzeug-Netzwerk weist mindestens eine vorstehend genannte Netzwerk-Komponente, mindestens ein Netzwerksegment und mindestens eine weitere Netzwerk-Komponente in dem mindestens einen Netzwerksegment auf, wobei die weitere Netzwerk-Komponente von der einen Netzwerk-Komponente mit Versorgungsspannung versorgbar ist oder versorgt wird.

Gemäß einer vorteilhaften Ausgestaltung des erfindungsgemäßen Fahrzeug-Netzwerks ist vorgesehen, dass die weitere Netzwerk-Komponente oder zumindest eine der weiteren Netzwerk-Komponenten eine netzwerkfähige Fahrzeug-Komponente ist.

Schließlich ist mit Vorteil vorgesehen, dass das Fahrzeug-Netzwerk eine verzweigte Topologie, insbesondere eine Stern-Topologie, eine Baum-Topologie und/oder eine vermaschte Topologie aufweist.

Das Fahrzeug-Netzwerk ist bevorzugt ein Power over Ethernet (PoE) Netzwerk, besonders bevorzugt jedoch ein PoE Netzwerk das nicht dem IEEE-Standard 802.3af oder 802.3at (PoE+) entspricht und an die Bedürfnisse der netzwerkfähigen Fahrzeugkomponenten angepasste Parameter, insbesondere eine an die mindestens eine benötigten Spannung dieser netzwerkfähigen Fahrzeugkomponente(n) angepasste Versorgungsspannung, aufweist.

Nachfolgend wird die Erfindung unter Bezugnahme auf die anliegenden Zeichnungen anhand bevorzugter Ausführungsbeispiele näher erläutert.

Es zeigen:
- Fig. 1: ein Schaltbild eines einfachen Fahrzeug-Netzwerks gemäß einer ersten vorteilhaften Ausgestaltung der Erfindung,
- Fig. 2: ein Schaltbild eines Fahrzeug-Netzwerks gemäß einer zweiten vorteilhaften Ausgestaltung der Erfindung,
- Fig. 3: ein Schaltbild eines Fahrzeug-Netzwerks gemäß einer dritten vorteilhaften Ausgestaltung der Erfindung,
- Fig. 4: ein Schaltbild einer Koppeleinrichtung für eine Netzwerk-Komponente gemäß einer ersten vorteilhaften Ausgestaltung einer Netzwerk-Komponente,
- Fig. 5: ein Schaltbild einer Koppeleinrichtung für eine Netzwerk-Komponente gemäß einer zweiten vorteilhaften Ausgestaltung der Netzwerk-Komponente und
- Fig. 6: ein Schaltbild einer Koppeleinrichtung für eine Netzwerk-Komponente gemäß einer dritten vorteilhaften Ausgestaltung der Netzwerk-Komponente.

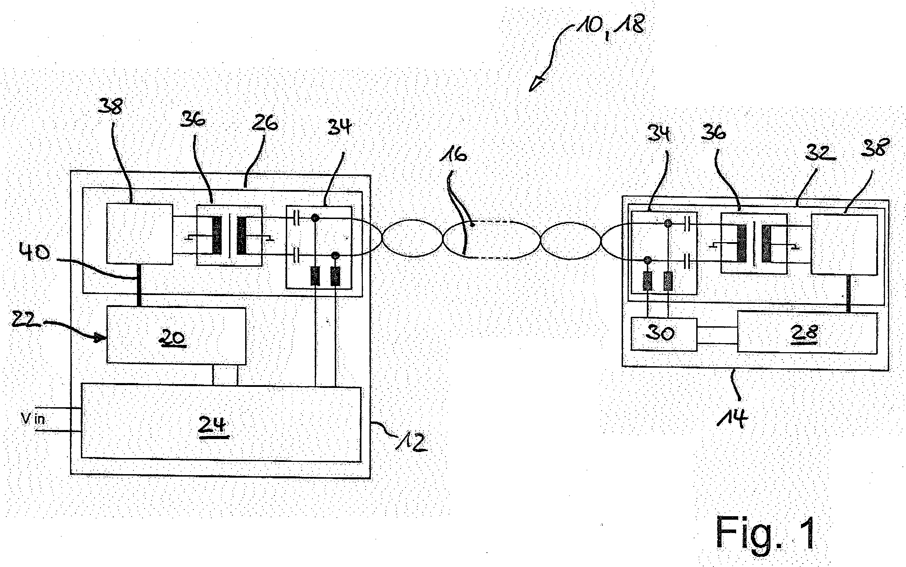

Die Figur 1 zeigt ein besonders einfach aufgebautes Fahrzeug-Netzwerk 10. Dieses Fahrzeug-Netzwerk 10 weist eine Netzwerk-Komponente 12 und eine weitere Netzwerk-Komponente 14 auf, die mittels Leitungen 16 in einem Netzwerksegments 18 verbunden sind. Dieses Netzwerksegment 18 ist bei dem einfachen Fahrzeug-Netzwerk 10 der Fig. 1 bereits das gesamte Netzwerk 10. Die eine Netzwerk-Komponente 12 ist eine Netzwerkkomponente 12 zur Spannungsversorgung der weiteren Netzwerk-Komponente 14 bzw. zur Versorgung der weiteren Netzwerk-Komponente 14 mit elektrischer Energie über die Leitungen 16 des Netzwerksegments 18.

Die eine Netzwerk-Komponente 12 weist eine einen Prozessor 20 umfassende Signalverarbeitungs-Einrichtung 22, eine Spannungsquelle 24 und eine mit der Signalverarbeitungs-Einrichtung 22 und der Spannungsquelle 24 verbundene Koppeleinrichtung 26 auf. Die Signalverarbeitungs-Einrichtung 22 der einen Netzwerk-Komponente 12 der Fig. 1 ist eine SignalverarbeitungsEinrichtung für die Netzwerk-Komponente selbst.

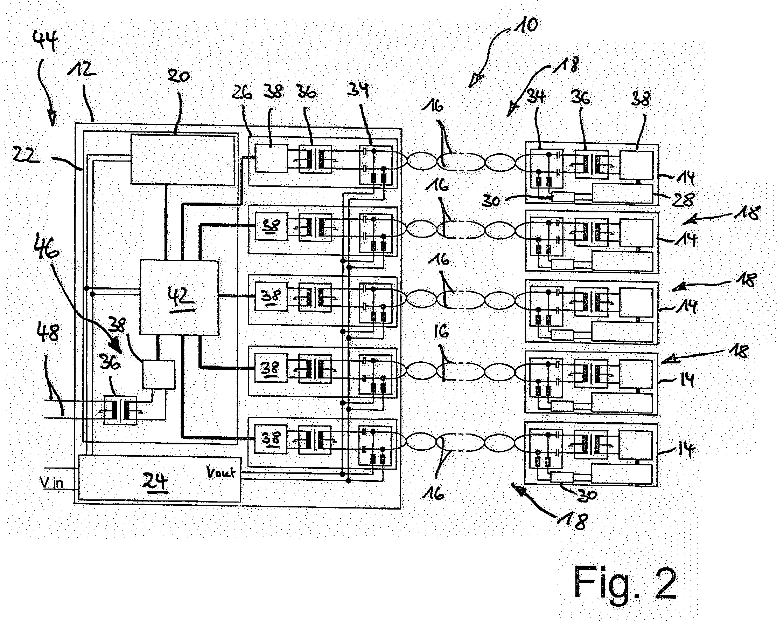

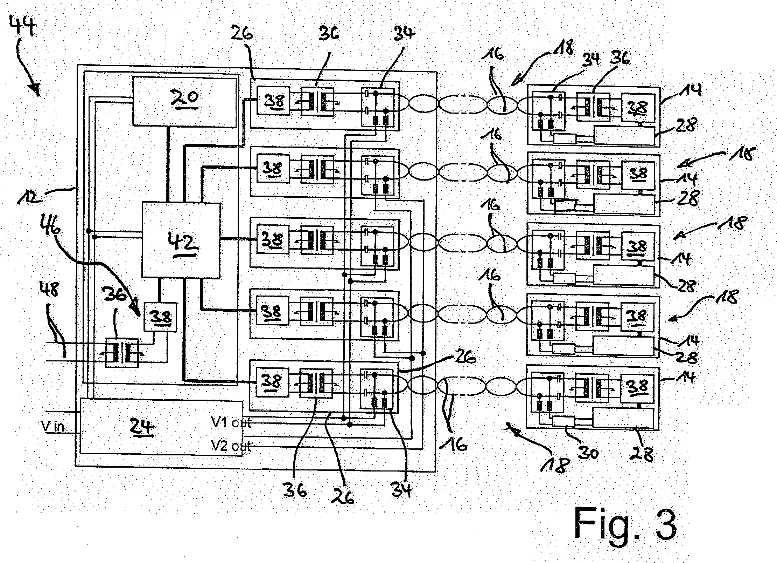

Wie später in den Ausführungsbeispielen der Figuren 2 und 3 erkennbar sein wird, kann die Signalverarbeitungs-Einrichtung 22 auch eine Signalverarbeitungseinrichtung mit einer Funktion für das gesamte Netzwerk 10 (Switch-Funktion) sein. Die Koppeleinrichtung 26 ist so eingerichtet, dass die Leitungen 16 des Netzwerksegments 18 zur gleichzeitigen signaltechnischen Verbindung dieses Netzwerksegments 18 mit der Signalverarbeitungs-Einrichtung 22 und zur Spannungsversorgung dieses Netzwerksegments 18 durch die Spannungsquelle 24 an die Koppeleinrichtung 26 anschließbar sind. Dabei sind genau zwei Leitungen 16 für das Fahrzeug-Netzwerk 10 bzw. Netzwerk-Segment 18 vorgesehen.

Die weitere Netzwerk-Komponente 14 weist ebenfalls eine als Prozessor 20 ausgebildete Signalverarbeitungs-Einrichtung 28, eine Spannungsversorgungs-Einheit 30 für die Signalverarbeitungs-Einrichtung 28 und eine mit der Signalverarbeitungs-Einrichtung 28 und deren Spannungsversorgungs-Einheit 30 verbundene Koppeleinrichtung 32 auf. Die Spannungsversorgungs-Einheit ist als Linearregler ausgebildet bzw. weist einen Linearregler auf. Die Koppeleinrichtung 32 der weiteren Netzwerk-Komponente 14 entspricht in Funktion und Aufbau im Wesentlichen der Koppeleinrichtung 26 der einen Netzwerk-Komponente 12.

Das Ausführungsbeispiel der Fig. 1 zeigt also eine 1:1 Beziehung zwischen der als Versorgungseinheit fungierenden einen Netzwerk-Komponente 12 und der als ein Gerät für das Fahrzeug fungierenden weiteren Netzwerk-Komponente 14 (unverzweigte Netzwerk-Topologie).

Die Koppeleinrichtungen 26, 32 weisen jeweils ein Koppelnetzwerk 34 auf. Das Koppelnetzwerk 34 weist pro zugeordneter Leitung 16 einen Strompfad mit Verzweigung auf, wobei in dem einen Zweig ein kapazitives Bauelement und in dem anderen Zweig ein induktives Bauelement angeordnet ist. Die signaltechnische Verbindung erfolgt über den ersten Zweig und die Spannungsversorgung über den zweiten Zweig. Den ersten Zweigen ist ein Transformator 36 und eine physikalische Schnittstelle (PHY) 38 nachgeschaltet. Diese ist signaltechnisch mit dem Prozessor 20 der jeweiligen Signalverarbeitungs-Einrichtung 22, 28 verbunden.

Die Spannungsquelle 24 weist einen Spannungseingang Vin zum Anschluss an das Versorgungsnetz (Bordnetz) des entsprechenden Fahrzeugs auf. Zur Entkopplung der Spannung der Spannungsquelle von Spannungsspitzen, etc. im Bordnetz weist die Spannungsquelle 24 bordnetzseitig Filter und/oder eine Schutzbeschaltung auf.

Die von der Spannungsquelle 24 bereitgestellte Versorgungsspannung Vout, V1out, V2out für das Netzwerksegment 18 oder die Netzwerksegmente 18 ist aus einer Auswahl mehrerer vorbestimmter Spannungsniveaus auswählbar. Die Auswahl des mindestens einen Spannungsniveaus erfolgt zum Beispiel manuell mittels einer Eingabeeinrichtung oder mittels einer signaltechnischen Verbindung (einer Steuerleitung) 40 zwischen dem Prozessor 20 der Signalverarbeitungs-Einrichtung 22 und der Spannungsquelle 24 zu deren Ansteuerung durch den Prozessor 20. Da der Prozessor 20 über das Fahrzeugnetzwerk 10 ansteuerbar ist, kann die Auswahl somit auch über das Netzwerk 10 erfolgen.

Die in den Figuren 2 und 3 gezeigten Fahrzeug-Netzwerke 10 zeigen jeweils eine verzweigte Netzwerk-Topologie. Die gezeigten Fahrzeug-Netzwerke 10 können zum Beispiel Sub-Netzwerke eines größeren Fahrzeug-Netzwerks mit einer Baum-Topologie sein.

Die Ausführungsbeispiele der Figuren 2 und 3 entsprechen in einigen Aspekten dem Ausführungsbeispiel der Fig. 1, sodass hier nur auf die Unterschiede eingegangen werden soll. Die in den Figuren 2 und 3 gezeigten Fahrzeug-Netzwerke 10 weisen eine 5:1 Beziehung der als Versorgungseinheit fungierenden einen Netzwerk-Komponente 12 und der als Geräte für das Fahrzeug fungierenden weiteren Netzwerk-Komponenten 14 (verzweigte Netzwerk-Topologie).

Die eine Netzwerk-Komponente 12 ist eine Switch-Einrichtung, deren Signalverarbeitungs-Einrichtung 22 eine Netzwerk-Weiche (einen Switch) 42 zur schaltbaren signaltechnischen Verbindung des mindestens einen Netzwerksegments 18 mit mindestens einem zweiten Netzwerksegment 44 des Fahrzeug-Netzwerks 10 aufweist. Der Prozessor 20 dient bei der Signalverarbeitungs-Einrichtung 22 dieser Ausführungsbeispiele zusätzlich als Switch-Manager der Netzwerkweiche (des Switches) 42. Diese ist über die mehreren (hier fünf) Koppeleinrichtungen 26 an die mehreren (hier fünf) einen Netzwerk-Segmente 18 und über eine Serienschaltung 46 eines Transformators und einer physikalische Schnittstelle (PHY) an die Leitungen 48 des zweiten Netzwerksegments 42 verbunden. Ist die Switch-Einrichtung am Kopfende (an der Wurzel) eines Fahrzeug-Netzwerks 10 mit Baum-Topologie angeordnet, so ist die Switch-Einrichtung mit einem Netzwerk-Manager (nicht gezeigt) im zweiten Netzwerk-Segment 42 verbunden.

Die Spannungsquelle 24 der in Fig. 3 gezeigten einen Netzwerk-Komponente 12 hat zwei unterschiedliche Spannungsausgänge V1out, V2out. Diese sind mit unterschiedlichen Gruppen von Netzwerk-Segmenten 18 verbunden (Gruppe 1: erstes, drittes und fünftes Netzwerk-Segment; Gruppe 2: zweites und viertes Netzwerk-Segment). Die unterschiedlichen Spannungsausgänge können unterschiedliche Versorgungsspannungen liefern.

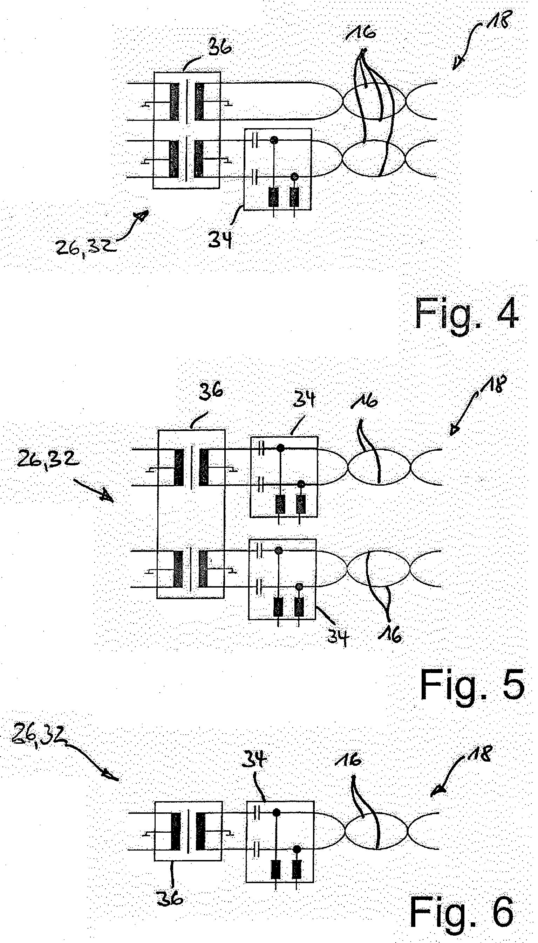

Die Figuren 4 und 5 zeigen ein Ausführungsbeispiel des Koppelnetzwerkes 34 in ein Ethernet Netzwerk mit 100BaseTx als physischem Layer. Im entsprechenden Netzwerksegment 18 sind zwei Leitungspaare vorgesehen. In der Ausführungsform der Fig. 4 weist die Koppeleinrichtung 32 für eines dieser Leitungspaare ein Koppelnetzwerk 34 auf, während das andere der Leitungspaare direkt über einen Transformator an die physikalische Schnittstelle 38 angeschlossen wird. In der Ausführungsform der Fig. 5 weist die Koppeleinrichtung 32 für beide Leitungspaare ein Koppelnetzwerk 34 auf.

Die Fig. 6 zeigt ein Ausführungsbeispiel des Koppelnetzwerkes 34 in ein Ethernet Netzwerk mit BroadR-Reach™ als physischem Layer. Die Koppeleinrichtung 32 entspricht der in den Figuren 1 bis 3 beschriebenen Koppeleinrichtungen.

Das generelle Konzept des Fahrzeug-Netzwerkes 10 und der versorgenden Netzwerk-Komponente 12 ist eine Leistungsversorgung von und eine Kommunikation mit weiteren NetzwerkKomponenten (Geräten) 14 über dasselbe physikalische Medium, das in unserem Fall speziell Ethernet - wie in den IEEE 802.3 Standards definiert - ist. Dabei können auch spezielle elektrische physische Layer, wie die BroadR-Reach™ Technology von Broadcom, zum Einsatz kommen. Im Gegensatz zu normalen PoE bzw PoE+ übertragen wir speziell eine Versorgungsspannung die unabhängig von der tatsächlichen Batteriespannung ist, so dass speziell der Einsatzbereich in Kraftfahrzeugen (Automobilen) möglich ist. Hierbei kann die Bordnetzspannung bzw. eine um Störimpulse bereinigte Bordnetzspannung verwendet werden (z. B. 12 V / 48 V oder bei Elektrofahrzeugen auch höhere Spannungen wie z. B. 600 V). Desweiteren kann auch eine Spannung kleiner 12 V verwendet werden so dass direkt die elektronischen Bauelemente ohne weitere Regelungsstufen versorgt werden können. Typischerweise werden hierbei Spannungen wie 5V bzw. 3,3V bzw. 1,2V verwendet. Abhängig vom verwendeten Kabel kann hierbei auch ein entsprechender Spannungsabfall auf dem Kabel und in der Koppeleinrichtung berücksichtigt werden. Generell ist die Höhe der Spannung nicht auf die bei der PoE Standardisierung festgelegten Werte beschränkt.

Dabei speist eine versorgende Netzwerk-Komponente (Versorgungseinheit) 12 über ein Koppelnetzwerk Energie in die (Ethernet-)Leitungen 16 ein. Es wird nur eine Einheit, die so genannte Versorgungseinheit, direkt mit dem Versorgungsnetz (Bordnetz des Fahrzeugs) verbunden. Die Versorgungseinheit beinhaltet ein Netzteil mit Filter- und Schutzkomponenten und liefert je nach Anwendung und angeschlossenen Geräten eine Ausgangsspannung die der des Hauptversorgungsnetzes entspricht oder aber auch davon abweichen kann (Beispielsweise 48 V Hauptversorgung und 12 V Ausgangsspannung aus der Versorgungseinheit, bzw. 12 V Hauptversorgung und 6 V Ausgangsspannung aus der Versorgungseinheit). Diese Spannung wird mit einem Koppelnetzwerk in die angeschlossene(n) Ethernetleitung(en) eingespeist. Es ist möglich spezielle Spannungswerte in der Versorgungseinheit zu generieren die typischerweise im einem Fahrzeug ansonsten nicht über Leitungen übertragen werden (z. B. 7 V).

Eine der weiteren Netzwerk-Komponenten 14 greift über ihr Koppelnetzwerk 34 Leistung von den (Ethernet-)Leitungen ab. Die übrigen weiteren Netzwerk-Komponenten 14 beinhalten ebenfalls ein Koppelnetzwerk 34 um die übertragene Spannung von den Ethernetsignalen zu trennen. Nach der Trennung können verschiedene Mechanismen eingesetzt werden um die in der Komponente 14 notwendigen Spannungen zu generieren. Ein Beispiel hierfür ist ein Linearregler um eine Festspannung von 5 V bzw. 3.3 V zu erhalten.

Es ergeben sich folgende Vorteile:
1. Vorteile in der Verlegung der Leitungen (Verkabelung, insbesondere im Kabelbaum) des Fahrzeugs. Durch den Multiplex von Signal- und Versorgungsleitung ergibt sich ein Kostenvorteil da sich der Verkabelungsaufwand verringert, d. h. die normalerweise vorhandenen Versorgungsleitungen können eingespart werden.
2. Vorteile in den im Fahrzeug verbauten weiteren Netzwerk-Komponenten (Geräten) 14. Gegenüber der direkten Anbindung aller weiterer Netzwerk-Komponenten 14 an das Bordnetz ergeben sich erhebliche Einsparungen, da Überspannungsschutz, Filter und Schaltnetzteil nur in der mindestens einen Netzwerk-Komponente 12 notwendig ist. Durch die Möglichkeit in den zu versorgenden weiteren Netzwerk-Komponenten (Geräten) 14 Linearregler einzusetzen, ergeben sich weniger Probleme bzgl. elektromagnetischer Verträglichkeit (EMV) da auf Schaltnetzteile verzichtet werden kann. Des Weiteren können die zu versorgenden weiteren Netzwerk-Komponenten 14 aufgrund der wegfallenden Komponenten platzsparender realisiert werden. Dadurch ist es auch möglich elektronische Bauelemente direkt zu versorgen (5 V bzw. 3,3 V etc.)

Vorteile gegenüber dem standardisierten Power over Ethernet (PoE). Gegenüber dem standardisierten PoE ist dieser Ansatz für eine Versorgungsspannung von 12 V (+/- x V) geeignet und kann daher in Fahrzeugen ohne Änderungen der generellen Versorgungsstrategie (d. h. Wechsel auf ein 48 V Bordnetz) eingesetzt werden. Gegenüber der Fernspeisung über PoE ergeben sich ebenfalls deutliche Einsparungen, da die unter PoE benötigten Steuerkomponenten und der DC/DC-Wandler in den zu versorgenden Modulen wegfallen. Gleichzeitig senkt der Einsatz von Linearreglern die elektro-magnetische Abstrahlung im Vergleich zu den unter PoE benötigten DC/DC-Wandlern.

Des Weiteren kann die übertragene Versorgungsspannung an die weiteren Netzwerk-Komponenten 14 angepasst, und somit der Wirkungsgrad optimiert werden. Somit können im Vergleich zu Standard PoE die zu versorgenden weiteren Netzwerk-Komponenten 14 aufgrund der wegfallenden Komponenten platzsparender und kostengünstiger realisiert werden.

Ein weiterer Vorteil ist die dynamische Anpassung der Versorgungsspannung. Damit ließe sich z. B. folgendes realisieren (eine Grundversorgung die z. B. die Kommunikationseinheit versorgt). Wenn die Netzwerk-Komponente 14 signalisiert dass eine erhöhte Leistungsaufnahme notwendig ist dann könnte dies durch 12 bereitgestellt werden. Die Signalisierung könnte hierbei über die Datenverbindung erfolgen.

## Patentansprüche

1. Netzwerk-Komponente (12), insbesondere netzwerkfähige Fahrzeug-Komponente, eines Fahrzeug-Netzwerks (10), mit einer einen Prozessor (20) aufweisenden Signalverarbeitungs-Einrichtung (22), mindestens einer an ein Versorgungsnetz des Fahrzeugs anschließbaren Spannungsquelle (24) und mindestens einer mit der Signalverarbeitungs-Einrichtung (22) und der Spannungsquelle (24) verbundenen Koppeleinrichtung (26), wobei Leitungen (16) mindestens eines Netzwerksegments (18) des Fahrzeugnetzwerks (10) zur gleichzeitigen signaltechnischen Verbindung dieses Netzwerksegments (18) mit der Signalverarbeitungs-Einrichtung (22) und zur Spannungsversorgung dieses Netzwerksegments (18) durch die Spannungsquelle (24) an die Koppeleinrichtung (26) anschließbar sind und wobei die Spannungsquelle (24) derart eingerichtet ist, dass ein Spannungsverhältnis zwischen mindestens einer von der Spannungsquelle (24) bereitgestellten Versorgungsspannung (Vout, V1out, V2out) und der vom Versorgungsnetz bereitgestellten Spannung (Vin) aus einer Auswahl mehrerer vorbestimmter Spannungsverhältnisse auswählbar ist, **gekennzeichnet durch** eine Eingabeeinrichtung zur manuellen Auswahl des mindestens einen Spannungsniveaus und einer signaltechnischen Verbindung (40) zwischen dem Prozessor (20) der Signalverarbeitungs-Einrichtung (22) und der Spannungsquelle (24) zu deren Ansteuerung **durch** den Prozessor (20).

2. Netzwerk-Komponente nach Anspruch 1, **dadurch gekennzeichnet, dass** die Spannungsquelle (24) für ein Spannungsniveau der vom Versorgungsnetz bereitgestellten Spannung vorgesehen ist, das ein fahrzeugtypisches Spannungsniveau ist.

3. Netzwerk-Komponente nach Anspruch 1 oder 2, d a - **durch gekennzeichnet**, dass die Spannungsquelle (24) eine Filter- und/oder Schutzbeschaltung zum Aussondern von aus dem Versorgungsnetz kommenden Störspannungsanteilen aufweist.

4. Netzwerk-Komponente nach einem der vorhergehenden Ansprüche, **dadurch gekennzeichnet, dass** die Netzwerk-Komponente (12) zur Versorgung von zumindest zwei Netzwerksegmenten (18) oder zumindest zwei Gruppen von Netzwerksegmenten mit Versorgungsspannungen unterschiedlicher Spannungsniveaus eingerichtet ist.

5. Netzwerk-Komponente nach einem der vorhergehenden Ansprüche, **dadurch gekennzeichnet, dass** an die Koppeleinrichtung pro Netzwerksegment (18) entweder ein Leitungspaar anschließbar ist oder zwei Leitungspaare anschließbar sind.

6. Netzwerk-Komponente nach einem der vorhergehenden Ansprüche, **dadurch gekennzeichnet, dass** die Signalverarbeitungs-Einrichtung (22) eine Netzwerk-Weiche (42) zur schaltbaren signaltechnischen Verbindung des mindestens einen Netzwerksegments (18) mit mindestens einem zweiten Netzwerksegment des Fahrzeug-Netzwerks (10) aufweist.

7. Fahrzeug-Netzwerk (10) mit mindestens einer Netzwerk-Komponente (12) nach einem der Ansprüche 1 bis 6, mindestens einem Netzwerksegment (18) und mindestens einer weiteren Netzwerk-Komponente (14) in dem mindestens einen Netzwerksegment (18), die von der einen Netzwerk-Komponente (12) mit Versorgungsspannung versorgbar ist oder versorgt wird.

8. Fahrzeug-Netzwerk nach Anspruch 7, **dadurch gekennzeichnet , dass** die weitere Netzwerk-Komponente (14) oder zumindest eine der weiteren Netzwerk-Komponenten (14) eine netzwerkfähige Fahrzeug-Komponente ist.

9. Fahrzeug-Netzwerk nach Anspruch 7 oder 8, **dadurch gekennzeichnet, dass** die Leitungen (16) im mindestens einen Netzwerksegment (18) jeweils nur ein Leitungspaar umfassen oder jeweils zwei Leitungspaare umfassen.

10. Fahrzeug-Netzwerk nach einem der Ansprüche 7 bis 9, **dadurch gekennzeichnet, dass** das Fahrzeug-Netzwerk (10) eine verzweigte Topologie, insbesondere eine Stern-Topologie, eine Baum-Topologie und/oder eine vermaschte Topologie aufweist.

## Claims

1. Network component (12), in particular a network-capable vehicle component, of a vehicle network (10), having a signal processing device (22) which has a processor (20), at least one voltage source (24) which can be connected to a supply network of the vehicle, and at least one coupling device (26) which is connected to the signal processing device (22) and to the voltage source (24), lines (16) of at least one network segment (18) of the vehicle network (10) being able to be connected to the coupling device (26) for the purpose of simultaneously connecting this network segment (18), for signaling purposes, to the signal processing device (22) and for the purpose of supplying voltage to this network segment (18) by means of the voltage source (24), and the voltage source (24) being set up in such a manner that a voltage ratio between at least one supply voltage (Vout, V1out, V2out) provided by the voltage source (24) and the voltage (Vin) provided by the supply network can be selected from a selection of a plurality of predetermined voltage ratios **characterized by** an input device for manually selecting the at least one voltage level and a signaling connection (40) between the processor (20) of the signal processing device (22) and the voltage source (24) for the control thereof by the processor (20).

2. Network component according to Claim 1, **characterized in that** the voltage source (24) is intended for a voltage level of the voltage provided by the supply network which is a voltage level typical of a vehicle.

3. Network component according to Claim 1 or 2, **characterized in that** the voltage source (24) has a filter and/or protective circuit for eliminating interference voltage components coming from the supply network.

4. Network component according to one of the preceding claims, **characterized in that** the network component (12) is set up to supply at least two network segments (18) or at least two groups of network segments with supply voltages of different voltage levels.

5. Network component according to one of the preceding claims, **characterized in that** either one line pair or two line pairs can be connected to the coupling device for each network segment (18).

6. Network component according to one of the preceding claims, **characterized in that** the signal processing device (22) has a network switch (42) for switchably connecting the at least one network segment (18) to at least one second network segment of the vehicle network (10) for signaling purposes.

7. Vehicle network (10) having at least one network component (12) according to one of Claims 1 to 6, at least one network segment (18) and at least one further network component (14) in the at least one network segment (18) which can be or is supplied with supply voltage by the one network component (12).

8. Vehicle network according to Claim 7, **characterized in that** the further network component (14) or at least one of the further network components (14) is a network-capable vehicle component.

9. Vehicle network according to Claim 7 or 8, **characterized in that** the lines (16) in the at least one network segment (18) each comprise only one line pair or each comprise two line pairs.

10. Vehicle network according to one of Claims 7 to 9, **characterized in that** the vehicle network (10) has a branched topology, in particular a star topology, a tree topology and/or a meshed topology.

## Revendications

1. Composant (12) de réseau, notamment composant de véhicule pouvant être mis en réseau, d'un réseau (10) de véhicule, comprenant un dispositif (22) de traitement du signal ayant un processeur (20), au moins une source (24) de tension pouvant être raccordée à un réseau d'alimentation du véhicule et au moins un dispositif (26) de couplage relié au dispositif (22) de traitement du signal et à la source (24) de tension, des lignes (16) d'au moins un segment (18) du réseau (10) du véhicule pouvant, pour la liaison en même temps en technique du signal de ce segment (18) du réseau au dispositif (22) de traitement du signal et pour l'alimentation en tension de ce segment (18) du réseau par la source (24) de tension, être reliées au dispositif (26) de couplage et la source (24) de tension étant agencée de manière à pouvoir choisir un rapport de tension entre au moins une tension (Vout, V1out, V2out) d'alimentation mise à disposition par la source (24) de tension et la tension (Vin) mise à disposition par le réseau d'alimentation dans un choix de plusieurs rapports de tension définis à l'avance, **caractérisé par** un dispositif d'entrée pour le choix manuel du au moins un niveau de tension et d'une liaison (40) en technique du signal entre le processeur (20) du dispositif (22) de traitement du signal et la source (24) de tension pour sa commande par le processeur (20).

2. Composant de réseau suivant la revendication 1, **caractérisé en ce que** la source (24) de tension est prévue pour un niveau de la tension mise à disposition par le réseau d'alimentation, qui est un niveau de tension typique pour le véhicule.

3. Composant de réseau suivant la revendication 1 ou 2, **caractérisé en ce que** la source (24) de tension a un circuit de filtrage et/ou de protection pour éliminer des parties parasites de tension venant du réseau d'alimentation.

4. Composant de réseau suivant l'une des revendications précédentes, **caractérisé en ce que** le composant (12) de réseau est conçu pour l'alimentation d'au moins deux segments (18) de réseau ou d'au moins deux groupes de segments du réseau en des tensions d'alimentation de niveau de tension différentes.

5. Composant de réseau suivant l'une des revendications précédentes, **caractérisé en ce qu'**au dispositif de couplage peut être reliée par segment (18) de réseau soit une paire de lignes, soit deux paires de lignes.

6. Composant de réseau suivant l'une des revendications précédentes, **caractérisé en ce que** le dispositif (22) de traitement du signal a un aiguillage (42) de réseau pour la liaison en technique du signal pouvant être commutée du au moins un segment (18) du réseau à au moins un deuxième segment du réseau (10) du véhicule.

7. Réseau (10) de véhicule ayant au moins un composant (12) de réseau suivant l'une des revendications 1 à 6, au moins un segment (18) de réseau et au moins un autre composant (14) de réseau dans le au moins un segment (18) du réseau, qui est alimenté en une tension d'alimentation par le un composant (12) du réseau ou qui peut l'être.

8. Réseau de véhicule suivant la revendication 7, **caractérisé en ce que** l'autre composant (14) du réseau ou au moins l'un des autres composants (14) du réseau est un composant de véhicule pouvant être mis en réseau.

9. Réseau de véhicule suivant la revendication 7 ou 8, **caractérisé en ce que** les lignes (16) dans au moins un segment (18) du réseau comprennent respectivement seulement une paire de lignes ou respectivement deux paires de lignes.

10. Réseau de véhicule suivant l'une des revendications 7 à 9, **caractérisé en ce que** le réseau (10) de véhicule a une topologie ramifiée, notamment une topologie en étoile, une topologie arborescente et/ou une topologie maillée.
